# EUROPEAN PATENT SPECIFICATION

(11) **EP 3 372 094 B1**
(45) Date of publication and mention of the grant of the patent: **15.04.2026**
(21) Application number: 16861796.7
(22) Date of filing: 23.05.2016
(51) Int. Cl.: A23L 27/50

(54) **SOY SAUCE-LIKE SEASONING**
SOJASAUCENÄHNLICHES GEWÜRZ
ASSAISONNEMENT DE TYPE SAUCE SOJA

(30) Priority: 06.11.2015 JP 2015218516
(43) Date of publication of application: 12.09.2018
(73) Proprietor: Kikkoman Corporation, Noda-shi, Chiba 278-8601 (JP)
(72) Inventor: TAKEICHI, Junya, Noda-shi Chiba 278-8601 (JP); WADA, Hiroki, Noda-shi Chiba 278-8601 (JP); NAKAHARA, Takeharu, Noda-shi Chiba 278-8601 (JP)
(74) Representative: Kramer Barske Schmidtchen Patentanwälte PartG mbB
(86) International application number: PCT/JP2016/065197
(87) International publication number: WO 2017/077727

(56) References cited:
- JP-B1- S4 919 855
- US-A- 3 524 747
- DATABASE FSTA [online] INTERNATIONAL FOOD INFORMATION SERVICE (IFIS), FRANkFURT-MAIN, DE; 1983, USHIJIMA S ET AL: "Highly accurate estimation of organic acids in soy sauce by means of liquid chromatography. (translated)", XP002782088, Database accession no. FS-1983-10-T-0617
- USHIJIMA, HAMADA, KANBE: "Highly accurate estimation of organic acids in soy sauce by means of liquid chromatography. (translated)", JOURNAL OF THE JAPAN SOY SAUCE RESEARCH INSTITUTE, vol. 8, no. 2, 1983, JOURNAL OF THE JAPAN SOY SAUCE RESEARCH INSTITUTE [NIHON SHOYU KENKUJO ZASSHI] 1982 CENT. RES. LAB., KIKKOMAN KK, NODA-SHI, CHIBA-KEN, JAPAN, pages 58
- DATABASE FSTA [online] INTERNATIONAL FOOD INFORMATION SERVICE (IFIS), FRANkFURT-MAIN, DE; USHIJIMA S ET AL: "Highly accurate estimation of organic acids in soy sauce by means of liquid chromatography. (translated)", Database accession no. FS-1983-10-T-0617
- JOURNAL OF THE JAPAN SOY SAUCE RESEARCH INSTITUTE, vol. 8, no. 2, 1983, JOURNAL OF THE JAPAN SOY SAUCE RESEARCH INSTITUTE [NIHON SHOYU KENKUJO ZASSHI] 1982 CENT. RES. LAB., KIKKOMAN KK, NODA-SHI, CHIBA-KEN, JAPAN, pages 58
- JOURNAL OF THE AGRICULTURAL CHEMICAL SOCIETY OF JAPAN, vol. 35, no. 5, 1961, pages 458 - 465, XP009505986
- "Heisei 7 Nendo Shokuniku ni Kansuru Josei", KENKYU CHOSA SEIKA HOKOKUSHO, vol. 14, 1996, pages 349 - 354, XP009506180

## Description

### TECHNICAL FIELD

The present invention relates to a soy sauce-like seasoning.

### BACKGROUND ART

Soy sauce is a liquid seasoning produced by fermentation of raw materials such as soybeans, wheat, and a common salt using yeasts or the like. Soy sauce has a wide variety of applications, including a tabletop use where food materials are dipped in soy sauce or say sauce is dripped over food materials, and cooking of boiled food, broiled food, sauté, and the like. Soy sauce is also used as raw material of soup, sauce, and the like.

The article of Ushima et al. "Highly accurate estimation of organic acids in soy sauce by means of liquid chromatography" in the Journal of the Japan Soy Sauce Research Institute, vol. 8, no 2, page 58, discloses a sample being mixed with 0. 2m HCl containing 0.01m KH₂PO₄ and run at 40 or 45 deg. C on a high-salt negative ion-exchange column using an autosampler. Fractions are transferred to ethanolic 0.15m 1-ethyl-3(3-dimethylaminopropyl)carbodiimidohydrochloride (EDC) containing acidic (pH 4.5) pyridine, and reacted with 0.1m o-nitrophenylhydrazine in 0.2m HCl for 3 min, to form acid hydrazides, neutralized with NaOH and then heated to 100 deg. C.

US 3 524 747 A discloses a seasoning for giving a beef or meat-like flavour to foods. The seasoning includes amino acids, at least one organic acid, at least one phosphate and at least one 5'-nucleotide. The amino and organic acids can be free acids or salts of the acids or mixtures thereof. The amino acids include glutamic acid and alanine, histidine, arginine, threonine, methionine and leucine. The latter six amino acids constitute at least 30% by weight of the total amount of amino acids exclusive of glutamic acid. The organic acid is no more than three parts by weight based on the weight of the free organic acids to one part of all of the amino acids employed exclusive of the glutamic acid.

The article in the Journal of the Agricultural Chemical Society of Japan, vol. 35, no. 5, 1961, pages 458-465, discloses a naturally brewed raw soy sauce, wherein the matured solution of *Shinshiki Shoyu* is obtained by the procedure that soy is decomposed with hydrochloric acid. In this method an organic acid in soy sauce is separated and quantitated using silica gel column chromatography.

In order to provide a desirable flavor in food materials and cooked products, soy sauce is required to have lasting *umami* (*koku* attribute (richness)). As techniques for imparting or enhancing *koku* attribute (richness) in soy sauce, a method that produces a brewed light-color soy sauce with rich *umami* with the use of halotolerant lactic acid bacteria, and a method that enhances *koku* attribute (richness) by adding a pyroglutamyl dipeptide or a salt thereof to seasonings such as soy sauce are conventionally known (see, for example, Patent Literature 1 = PTL 1 = JP2004-24248A and Patent Literature 2 = PTL 2 = JP2012-29616A).

### DISCLOSURE OF THE INVENTION

### PROBLEMS TO BE SOLVED BY THE INVENTION

However, in addition to the known techniques, alternative means to impart *koku* attribute (richness) to soy sauce are much needed.

An object of the present invention to provide a novel soy sauce-like seasoning imparted with *koku* attribute (richness).

### MEANS FOR SOLVING THE PROBLEMS

The present inventors conducted intensive studies to find a solution to the foregoing problem, and, after confirming that traditional soy sauces hardly contain α-ketoglutaric acid, found out, rather surprisingly, that a soy sauce-like seasoning containing a certain quantity of α-ketoglutaric acid has a body, in addition to desirable *koku* attribute (richness). The present invention has been completed on the basis of this finding.

The object is achieved by a soy sauce-like seasoning according to claim 1 or a method according to claim 4. Further improvements are given in the dependent claims.

### EFFECT OF THE INVENTION

According to the present invention, a soy sauce-like seasoning having desirable *koku* attribute (richness) and a desirable body can be provided. Further, according to the present invention, a method for imparting desirable *koku* attribute (richness) to a soy sauce-like seasoning can be provided. Furthermore, according to the present invention, a method for imparting a desirable body to a soy sauce-like seasoning can be provided.

### BRIEF DESCRIPTION OF DRAWINGS

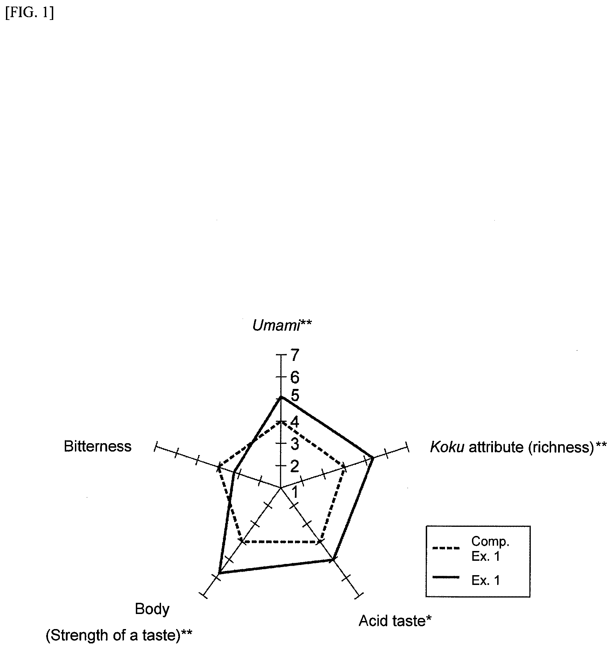

FIG. 1 is a diagram representing the result of a sensory evaluation of the soy sauce-like seasoning of Example 1. In the figure, * means an evaluation item for which the difference was statistically significant (*P* < 0.05), and ** means an evaluation item for which the difference was statistically significant (*P* < 0.01).

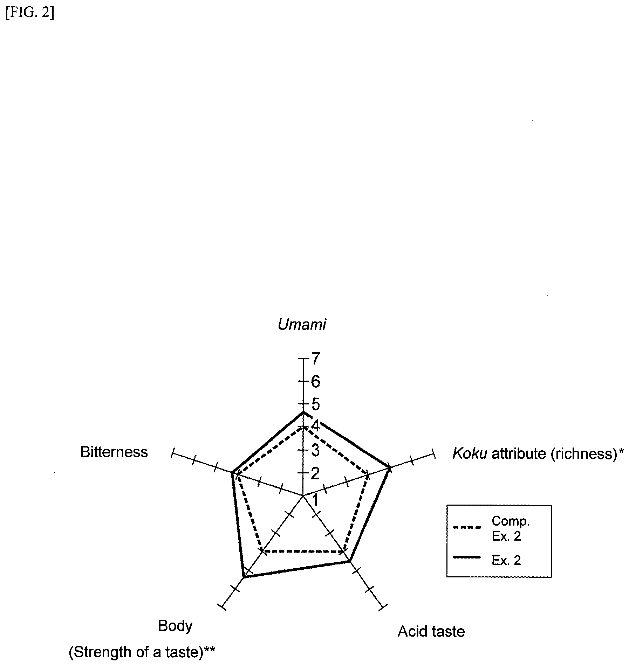

FIG. 2 is a diagram representing the result of a sensory evaluation of the soy sauce-like seasoning of Example 2. In the figure, * means an evaluation item for which the difference was statistically significant (*P* < 0.05), and ** means an evaluation item for which the difference was statistically significant (*P* < 0.01).

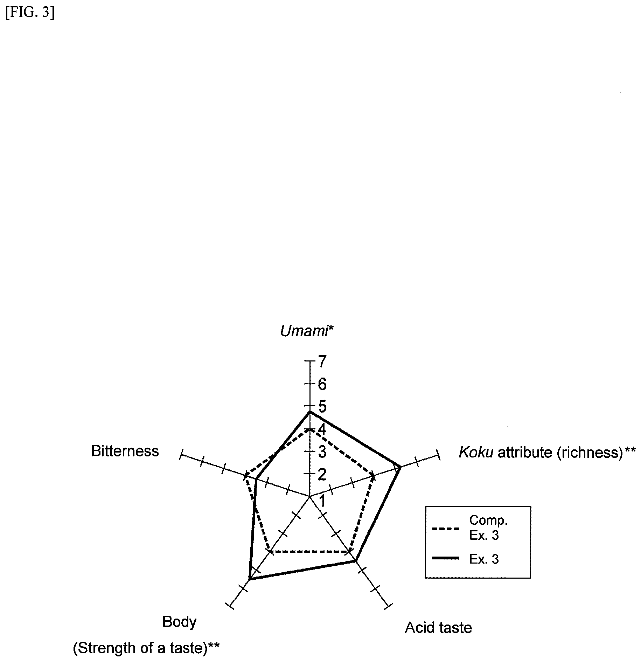

FIG. 3 is a diagram representing the result of a sensory evaluation of the soy sauce-like seasoning of Example 3. In the figure, * means an evaluation item for which the difference was statistically significant (*P* < 0.05), and ** means an evaluation item for which the difference was statistically significant (*P* < 0.01).

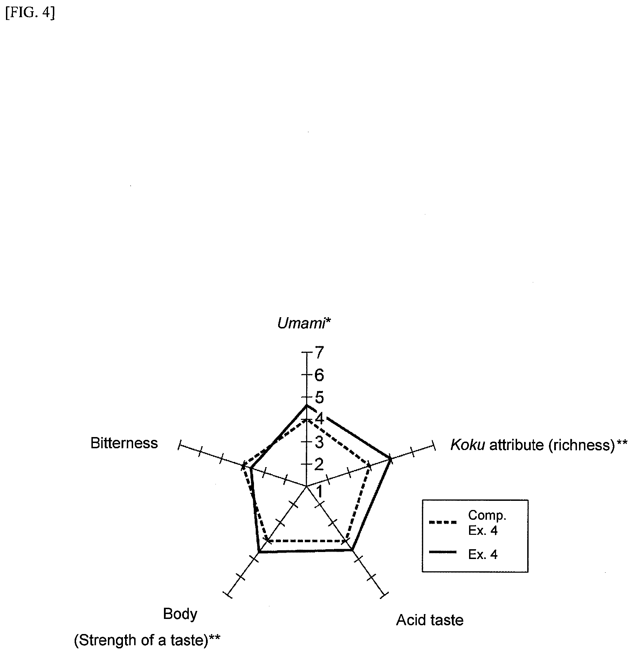

FIG. 4 is a diagram representing the result of a sensory evaluation of the soy sauce-like seasoning of Example 4. In the figure, * means an evaluation item for which the difference was statistically significant (*P* < 0.05), and ** means an evaluation item for which the difference was statistically significant (*P* < 0.01).

### EMBODIMENTS FOR CARRYING OUT THE INVENTION

Embodiments for carrying out the present invention are described below in detail. The present invention, however, is not limited to the following embodiments.

As used herein, "mM" means millimolar concentration.

As used herein, "soy sauce" means the "soy sauce" defined by The Japanese Agricultural Standards (May 28, 2015, Ministry of Agriculture, Forestry and Fisheries, Notification No. 1387).

As used herein, "soy sauce-like seasoning" refers to a liquid seasoning used for the same purposes as the "soy sauce" defined by The Japanese Agricultural Standards, and is a concept including soy sauce, and processed soy sauce products. Raw materials (for example, soybeans, and wheat) derived from a soy sauce *koji* are not necessarily required to be used for the soy sauce-like seasoning, provided that the soy sauce-like seasoning is used for the same purpose as the "soy sauce". The soy sauce-like seasoning may contain additives such as a fruit juice, a vegetable juice, extracts, soup stocks, sugars, seasoning blends, alcohol, fermented seasoning blends, acidulants, and flavoring agents. The soy sauce-like seasoning in this specification is preferably "one that is authentically brewed" in the same manner as described for the "soy sauce" defined by The Japanese Agricultural Standards. Also, the soy sauce-like seasoning in this specification is one that uses cereal-derived raw materials (for example, soybeans, barley or wheat, and rice). The soy sauce-like seasoning in this specification excludes a chemically processed say sauce including hydrolyzed vegetable protein. The soy sauce-like seasoning excludes soy sauce-like seasonings containing a raw material that has been decomposed with hydrochloric acid, and soy sauce-like seasonings that use chicken as a raw material.

As used herein, *"koku* attribute (richness)" means a deep, pleasant flavor with lasting tastes including *umami,* that stays in the mouth after eating or drinking.

### 1. Soy Sauce-Like Seasoning

The soy sauce-like seasoning according to the present embodiment contains α-ketoglutaric acid. The α-ketoglutaric acid may be free form, or may be in the form of a salt available as a food product. Examples of the salts of α-ketoglutaric acid include a sodium salt, and a potassium salt.

The soy sauce-like seasoning according to the present embodiment contains α-ketoglutaric acid in a concentration of 0.3 mM or more up to 3 mM. In this way, desirable *umami* and *koku* attribute (richness), and a desirable body can be imparted to the soy sauce-like seasoning. The concentration of α-ketoglutaric acid may be appropriately adjusted within a range of 0.3 mM or more up to 3 mM, according to the intended use of the soy sauce-like seasoning, the salt concentration, and the like.

The soy sauce-like seasoning according to the present embodiment contains α-ketoglutaric acid in a concentration of 3 mM or less. In this way, desirable *umami* and *koku* attribute (richness), and a desirable body can be imparted to the soy sauce-like seasoning.

Accordingly, the concentration of the α-ketoglutaric acid in the soy sauce-like seasoning according to the present embodiment may be from 0.3 mM to 3 mM.

The concentration of α-ketoglutaric acid may be measured by, for example, liquid chromatography-tandem mass spectrometry (LC/MS/MS), using a polymer reverse-phase chromatography column.

The salt concentration in the soy sauce-like seasoning according to the present embodiment is 9% (w/v) or less, more preferably 5% (w/v) or less

In the soy sauce-like seasoning according to the present embodiment, the lower limit of salt concentration is not particularly limited, and may be 0% (w/v) (salt-free).

The salt concentration may be measured by using known methods such as potentiometry and the Mohr's method.

The soy sauce-like seasoning according to the present embodiment may be used in the same fashion as the "soy sauce" of The Japanese Agricultural Standards, or may be used by being mixed into any food and beverages. For example, the soy sauce-like seasoning may be used as a raw material of soups, sauces, dressings, and the like, or may be used for cooking of boiled food, broiled food, sauté, and the like.

For example, the soy sauce-like seasoning according to the present embodiment can be produced by adding α-ketoglutaric acid to the base soy sauce-like seasoning, and adjusting the content of α-ketoglutaric acid, followed by optional procedures including dilution, concentration (e.g., deaeration, heating, drying, and heating and deaeration under reduced pressure), and addition of various additives. As another example, the soy sauce-like seasoning according to the present embodiment also may be produced by producing α-ketoglutaric in the base soy sauce-like seasoning through microorganism fermentation.

As the base soy sauce-like seasoning, for example, a soy sauce or a liquid seasoning produced by a known method may be used. From the viewpoint of exhibiting the effect of the present invention more remarkably, it is preferable to use a soy sauce, more preferably a soy sauce having a salt concentration of 9% (w/v) or less, further preferably a soy sauce having a salt concentration of 5% (w/v) or less.

A soy sauce having a salt concentration of 9% (w/v) or less, or a soy sauce having a salt concentration of 5% (w/v) or less can be produced by using, for example, a method in which a soy sauce produced by a known method is desalted by electrodialysis using an ion-exchange membrane, a method that dilutes a soy sauce produced by a known method, a method that performs preparation and fermentation under salt-free or low-salt conditions, and the like.

The soy sauce-like seasoning thus obtained may be refined. The refining method is not limited, and may be performed by known methods such as a membrane process, diatomaceous earth filtration, centrifugation, aggregation, and sedimentation.

The obtained soy sauce-like seasoning is pasteurized or processed for removal of bacteria. In the case of pasteurization, the process involves a heat pasteurization step. The heating may be performed under the heating conditions used in a known soy sauce production process. Preferably, the soy sauce-like seasoning is heated at from 80 to 85°C for from 20 to 60 minutes, or at from 110 to 120°C for from 5 to 20 seconds, and then cooled. Because the heating may produce sediments, the soy sauce-like seasoning is allowed to stand for a few days, and the supernatant is separated from the sediment to obtain the product soy sauce-like seasoning. For removal of bacteria, the soy sauce-like seasoning is, for example, filtered using a known MF membrane, and the filtrate is obtained as the product soy sauce-like seasoning.

### 2. Method for Imparting Koku attribute (richness) to Soy Sauce-Like Seasoning

The soy sauce-like seasoning according to the present embodiment exhibits an effect of having desirable *koku* attribute (richness). Accordingly, as an embodiment of the present invention, a method for imparting *koku* attribute (richness) to a soy sauce-like seasoning including adding at least 0.3 mM of α-ketoglutaric acid to a soy sauce-like seasoning is provided.

### 3. Method for Imparting Body to Soy Sauce-Like Seasoning

The soy sauce-like seasoning according to the present embodiment exhibits an effect of having desirable body. Accordingly, as an embodiment of the present invention, a method for imparting a body to a soy sauce-like seasoning including adding at least 0.3 mM of α-ketoglutaric acid to a soy sauce-like seasoning is provided.

### EXAMPLES

The following describes the present invention in greater detail using Examples. The present invention, however, is not limited to the following Examples.

### Example 1: Soy Sauce-Like Seasoning Having a Salt Concentration of 0% (w/v)

### Production of Soy Sauce-Like Seasoning Having a Salt Concentration of 0% (w/v)

Steamed and denatured defatted soybeans, and crushed roasted wheat were mixed in equal amounts, and seed starter of *Aspergillus sojae* is inoculated therein. Then, the mixture was processed for 42 hours using an ordinary method to obtain a soy sauce *koji (koji-making).*

One-hundred parts by mass of the soy sauce *koji* thus obtained was put into one-hundred thirty parts by mass of saline (salt concentration of 26% (w/v)), and the mixture was fermented and aged at 25 to 30°C for 150 days while being appropriately stirred to control fermentation, using an ordinary method. The aged *moromi* (*moromi-*mash) thus obtained was pressed and filtered to obtain an unheated soy sauce.

The obtained unheated soy sauce was heated at 80°C for 1 hour, and refined by filtration to obtain a soy sauce. The obtained soy sauce was then desalted with an electrodialyzer (manufactured by Astom Corporation) to obtain a soy sauce having a salt concentration of 0.1% (w/v) (Comparative Example 1).

The α-ketoglutaric acid concentration was below the detection limit (0.01 mM) both in the soy sauce obtained after filtration and refinement, and in the soy sauce having a salt concentration of 0.1% (w/v). The α-ketoglutaric acid concentration was measured by LC/MS/MS under the following conditions.
Measurement device: Alliance 2695, 2966, Quattro micro API (manufactured by Waters)
Column: YMC-Triart C18, 1.9 µm, 100 × 2.0 mm ID (manufactured by YMC Co., Ltd.)
Mobile phase: A) 0.1% (v/v) formic acid aqueous solution, B) methanol
Gradient: 0 - 1 min (B: 0%), 1 - 3 min (B: 0 - 15%), 3 - 8 min (B: 15 - 50%), 8 - 10 min (B: 50-100%)
Flow rate: 0.2 mL/min
Column temperature: 45°C
Ionization, analysis: ESI(-), MRM

To the obtained soy sauce having a salt concentration of 0.1% (w/v) was added α-ketoglutaric acid in a concentration of 1 mM, and these were mixed to obtain a soy sauce-like seasoning having a salt concentration of 0.1% (w/v) (Example 1).

### Sensory Evaluation Test

The soy sauce-like seasoning of Example 1, and the soy sauce of Comparative Example 1 were evaluated by sensory evaluation. The sensory evaluation was made by eight panelists having a discrimination ability. The panelists were asked to evaluate *umami, koku* attribute (richness), acid taste, body (strength of a taste), and bitterness in seven levels (7: very strong, 6: strong, 5: slightly strong, 4: no difference, 3: slightly weak, 2: weak, 1: very weak), relative to the soy sauce of Comparative Example 1 at the reference level (level 4), and average values were calculated. The result is shown in FIG. 1.

The soy sauce-like seasoning of Example 1 containing α-ketoglutaric acid had significantly improved *koku* attribute (richness) and body as compared to the soy sauce of Comparative Example 1. The soy sauce-like seasoning of Example 1 also had significantly improved *umami* and acid taste, and the overall flavor was more balanced than in the soy sauce of Comparative Example 1.

### Example 2: Soy Sauce-Like Seasoning Having a Salt Concentration of 5% (w/v)

### Production of Soy Sauce-Like Seasoning Having a Salt Concentration of 5% (w/v)

The soy sauce obtained after filtration and refinement in Example 1 was desalted with an electrodialyzer (manufactured by Astom Corporation) to obtain a soy sauce having a salt concentration of 5% (w/v) (Comparative Example 2).

The α-ketoglutaric acid concentration in the obtained soy sauce having a salt concentration of 5% (w/v) was below the detection limit (0.01 mM). The α-ketoglutaric acid concentration was measured in the same manner as in Example 1.

To the obtained soy sauce having a salt concentration of 5% (w/v) was added α-ketoglutaric acid in a concentration of 2.5 mM, and these were mixed to obtain a soy sauce-like seasoning having a salt concentration of 5% (w/v) (Example 2).

### Sensory Evaluation Test

The soy sauce-like seasoning of Example 2, and the soy sauce of Comparative Example 2 were evaluated in the same manner as in the sensory evaluation described in Example 1, using the soy sauce of Comparative Example 2 as a reference. The result is shown in FIG. 2.

The soy sauce-like seasoning of Example 2 containing α-ketoglutaric acid had significantly improved *koku* attribute (richness) and body compared to the soy sauce of Comparative Example 2. The soy sauce-like seasoning of Example 2 also generally had improved *umami* and acid taste, and the overall flavor was more balanced than in the soy sauce of Comparative Example 2.

### Example 3: Soy Sauce-Like Seasoning Having a Salt Concentration of 8.7% (w/v)

### Production of Soy Sauce-Like Seasoning Having a Salt Concentration of 8.7% (w/v)

The soy sauce obtained after filtration and refinement in Example 1 was desalted with an electrodialyzer (manufactured by Astom Corporation) to obtain a soy sauce having a salt concentration of 8.7% (w/v) (Comparative Example 3).

To the obtained soy sauce having a salt concentration of 8.7% (w/v) was added α-ketoglutaric acid in a concentration of 5 mM, and these were mixed to obtain a soy sauce-like seasoning having a salt concentration of 8.7% (w/v) (Example 3).

The α-ketoglutaric acid concentration in the soy sauce having a salt concentration of 8.7% (w/v) was below the detection limit (0.01 mM). The α-ketoglutaric acid concentration was measured in the same manner as in Example 1.

### Sensory Evaluation Test

The soy sauce-like seasoning of Example 3, and the soy sauce of Comparative Example 3 were evaluated in the same manner as in the sensory evaluation described in Example 1, using the soy sauce of Comparative Example 3 as a reference. The result is shown in FIG. 3.

The soy sauce-like seasoning of Example 3 containing α-ketoglutaric acid had significantly improved *koku* attribute (richness) and body compared to the soy sauce of Comparative Example 3. The soy sauce-like seasoning of Example 3 also generally had improved *umami* and acid taste, and the overall flavor was more balanced than in the soy sauce of Comparative Example 3.

### Example 4: Soy Sauce-Like Seasoning Having a Salt Concentration of 16% (w/v)

### Production of Soy Sauce-Like Seasoning Having a Salt Concentration of 16% (w/v)

α-Ketoglutaric acid was added in a concentration of 10 mM to a commercially available *koikuchi* (dark-colored) soy sauce having a salt concentration of 16% (w/v) (manufactured by Kikkoman Corporation; Comparative Example 4), and these were mixed to obtain a soy sauce-like seasoning having a salt concentration of 16% (w/v) (Example 4).

The α-ketoglutaric acid concentration in the soy sauce having a salt concentration of 16% (w/v) was below the detection limit (0.01 mM). The α-ketoglutaric acid concentration was measured in the same manner as in Example 1.

### Sensory Evaluation Test

The soy sauce-like seasoning of Example 4, and the soy sauce of Comparative Example 4 were evaluated in the same manner as in the sensory evaluation described in Example 1, using the soy sauce of Comparative Example 4 as a reference. The result is shown in FIG. 4.

The soy sauce-like seasoning of Example 4 containing α-ketoglutaric acid had significantly improved *koku* attribute (richness) and body compared to the soy sauce of Comparative Example 4. The soy sauce-like seasoning of Example 4 also generally had improved *umami* and acid taste, and the overall flavor was more balanced than in the soy sauce of Comparative Example 4.

### Test Example 1: Effect of Organic Acid on Flavor of Soy Sauce-Like Seasoning

Lactic acid, succinic acid, citric acid, fumaric acid, malic acid, adipic acid, or α-ketoglutaric acid was added in a concentration of 0.3 mM to the soy sauce having a salt concentration of 0.1% (w/v) (Comparative Example 1) obtained in Example 1, and these were mixed to obtain seven different soy sauce-like seasonings containing these organic acids.

The seven soy sauce-like seasonings thus obtained were evaluated by sensory evaluation. The sensory evaluation was made by five panelists having a discrimination ability. The panelists were asked to evaluate *umami, koku* attribute (richness), acid taste, body (strength of a taste), and bitterness in four levels (Excellent: large improvement, Good: improvement, Moderate: slight improvement, Poor: no difference), relative to the soy sauce of Comparative Example 1 used as a reference. The result is presented in Table 1. Incidentally, in Table 1, the evaluation results that were agreed by the largest number of panelists among the five panelists were described, and when different evaluation results were given by the same numbers of panelists, the evaluation result closer to the average was described.

**[Table 1]**

| | *Umami* | *Koku* attribute (richness) | Acid taste | Body (strength of a taste) | Bitterness | Comment |
|---|---|---|---|---|---|---|
| Lactic acid | Poor | Moderate | Moderate | Poor | Moderate | Mild acid taste, aftertaste is bitter and sour |
| Succinic acid | Excellent | Poor | Poor | Poor | Poor | Light soft *umami* |
| Citric acid | Poor | Poor | Good | Poor | Poor | Clear refreshing acid taste |
| Fumaric acid | Poor | Moderate | Excellent | Moderate | Moderate | Sharp pungent acid taste and bitterness |
| Malic acid | Poor | Moderate | Good | Moderate | Good | Sharp acid taste and bitterness |
| Adipic acid | Poor | Poor | Moderate | Poor | Poor | Mild acid taste with little sharpness in the aftertaste |
| α-Ketoglutaric acid | Good | Good | Moderate | Good | Poor | Acid taste with *umami,* long-lasting aftertaste (strong *koku* attribute (richness)) |

The soy sauce-like seasoning containing α-ketoglutaric acid had more desirable *koku* attribute (richness) and body than the soy sauce-like seasonings containing the other organic acids. The soy sauce-like seasoning containing α-ketoglutaric acid also had more desirable *umami,* and the overall flavor was more balanced.

## Claims

1. A soy sauce-like seasoning comprising α-ketoglutaric acid in a concentration of 0.3 mM to 3 mM,
which has a salt concentration of 9% (w/v) or less,
which excludes soy sauce-like seasonings containing a raw material that has been decomposed with hydrochloric acid and soy sauce-like seasonings that use chicken as a raw material,
wherein the soy sauce-like seasoning uses cereal-derived raw materials, and
wherein the soy sauce-like seasoning is pasteurized or processed for removal of bacteria.

2. The soy sauce-like seasoning according to claim 1, which has a salt concentration of 5% (w/v) or less.

3. The soy sauce-like seasoning according to any one of the preceding claims, wherein the cereal-derived materials are selected from: soybeans, barley, wheat, and rice.

4. A method for imparting *koku* attribute (richness) to a soy sauce-like seasoning, the method comprising:
using cereal-derived raw materials to obtain the soy sauce-like seasoning;
pasteurizing the soy sauce-like seasoning or processing the soy sauce-like seasoning to remove bacteria; and
adding α-ketoglutaric acid in a concentration of 0.3 mM to 3 nM to a soy sauce-like seasoning,
wherein the soy sauce-like seasoning has a salt concentration of 9% (w/v) or less.

5. The method according to claim 4, wherein the soy sauce-like seasoning has a salt concentration of 5% (w/v) or less.

6. The method according to any one of claims 4 or 5, wherein the cereal-derived materials are selected from: soybeans, barley, wheat, and rice.

## Patentansprüche

1. Sojasaucen-ähnliches Gewürz, das α-Ketoglutarsäure in einer Konzentration von 0,3 mM bis 3 mM enthält,
das eine Salzkonzentration von 9 % (w/v) oder weniger aufweist,
wobei Sojasaucen-ähnliche Gewürze, die einen mit Salzsäure zersetzten Rohstoff enthalten und Sojasaucen-ähnliche Gewürze, die Huhn als Rohstoff verwenden, ausgeschlossen sind,
bei dem das Sojasaucen-ähnliche Gewürz aus Getreide gewonnene Rohstoffe verwendet, und bei dem das Sojasaucen-ähnliche Gewürz pasteurisiert oder zur Entfernung von Bakterien verarbeitet ist.

2. Sojasaucen-ähnliches Gewürz nach Anspruch 1, das eine Salzkonzentration von 5 % (w/v) oder weniger aufweist.

3. Sojasaucen-ähnliches Gewürz nach einem der vorstehenden Ansprüche, bei dem die aus Getreide gewonnenen Rohstoffe ausgewählt sind aus: Sojabohnen, Gerste, Weizen und Reis.

4. Verfahren zum Verleihen einer *Koku*-Eigenschaft (Vollmundigkeit) an ein Sojasaucen-ähnliches Gewürz, das Verfahren aufweisend:
Verwendung von aus Getreide gewonnenen Rohstoffen, um das Sojasaucen-ähnliche Gewürz zu erhalten;
Pasteurisieren des Sojasaucen-ähnlichen Gewürzes oder Verarbeiten des Sojasaucen-ähnlichen Gewürzes zum Entfernen von Bakterien; und
Zusetzen von α-Ketoglutarsäure in einer Konzentration von 0,3 mM bis 3 nM zu einem Sojasaucen-ähnlichen Gewürz,
bei dem das Sojasaucen-ähnliche Gewürz eine Salzkonzentration von 9 % (w/v) oder weniger aufweist.

5. Verfahren nach Anspruch 4, bei dem das Sojasaucen-ähnliche Gewürz eine Salzkonzentration von 5 % (w/v) oder weniger aufweist.

6. Verfahren nach einem der Ansprüche 4 oder 5, bei dem die aus Getreide gewonnenen Materialien ausgewählt sind aus: Sojabohnen, Gerste, Weizen und Reis.

## Revendications

1. Assaisonnement de type sauce soja comprenant de l'acide α-cétoglutarate à une concentration comprise entre 0,3 mM et 3 mM,
dont la concentration en sel est inférieure ou égale à 9 % (p/v),
qui exclut les assaisonnements de type sauce soja contenant une matière première qui a été décomposée avec de l'acide chlorhydrique et les assaisonnements de type sauce soja qui utilisent du poulet comme matière première,
dans lequel l'assaisonnement de type sauce soja utilise des matières premières dérivées de céréales, et
dans lequel l'assaisonnement de type sauce soja est pasteurisé ou traité pour éliminer les bactéries.

2. Assaisonnement de type sauce soja selon la revendication 1, qui a une concentration en sel de 5 % (p/v) ou moins.

3. Assaisonnement de type sauce soja selon l'une quelconque des revendications précédentes, dans lequel les matières dérivées de céréales sont choisies parmi : les graines de soja, l'orge, le blé et le riz.

4. Procédé pour conférer un attribut *koku* (richesse) à un assaisonnement de type sauce soja, le procédé comprenant les étapes consistant à :
utiliser des matières premières dérivées de céréales pour obtenir l'assaisonnement de type sauce soja ;
pasteuriser l'assaisonnement de type sauce soja ou le traitement de l'assaisonnement de type sauce soja pour éliminer les bactéries ; et
ajouter de l'acide α-cétoglutarate à une concentration de 0,3 mM à 3 nM à un assaisonnement de type sauce soja,
dans lequel l'assaisonnement de type sauce soja a une concentration en sel de 9 % (p/v) ou moins.

5. Procédé selon la revendication 4, dans lequel l'assaisonnement de type sauce soja a une concentration en sel de 5 % (p/v) ou moins.

6. Procédé selon l'une quelconque des revendications 4 ou 5, dans lequel les matières dérivées de céréales sont choisies parmi : les graines de soja, l'orge, le blé et le riz.
